# EUROPEAN PATENT APPLICATION

(11) **EP 4 783 584 A1**
(43) Date of publication of application: **29.07.2026**
(21) Application number: 24867986.2
(22) Date of filing: 19.08.2024
(51) Int. Cl.: H04N 19/90, G06T 9/00, H04N 19/13, H04N 19/174

(54) **VIDEO ENCODER, VIDEO DECODER, VIDEO ENCODING METHOD, AND VIDEO DECODING METHOD**

(30) Priority: 21.09.2023 JP 2023155646; 08.03.2024 JP 2024035446
(71) Applicant: NEC Corporation, 108-8001 Tokyo (JP)
(72) Inventor: CHONO, Keiichi, Tokyo 108-8001 (JP); IIDA, Kenta, Tokyo 108-8001 (JP); TOKUMITSU, Kenta, Tokyo 108-8001 (JP); MORIYOSHI, Tatsuji, Tokyo 108-8001 (JP); BEYE, Florian, Tokyo 108-8001 (JP); NIHEI, Koichi, Tokyo 108-8001 (JP)
(74) Representative: Betten & Resch
(86) International application number: PCT/JP2024/029327
(87) International publication number: WO 2025/062905

(57) **Abstract**

In order to ensure independence and divisibility in neural network-based video encoding, the video encoding device includes a neural network, quantization means, and entropy encoding means, and further includes first control means that prevents a neural network-based encoding process from crossing a slice boundary.

## Description

### Technical Field

The present disclosure relates to a video encoding device, a video decoding device, a video encoding method, and a video decoding method.

### Background Art

In order to efficiently transmit or record a video, a video encoding device that generates an encoded expression (hereinafter, referred to as a bitstream) obtained by encoding an input video and a video decoding device that decodes a bitstream to generate a decoded video are used.

### [Video encoding Based on Predictive Coding in Coding Unit]

Examples of video coding scheme standards include H.264/AVC (Advanced Video Coding), H.265/HEVC (High-Efficiency Video Coding), and H.266/VVC (Versatile Video Coding), which are standardized by ITU-T SG16 and ISO/IEC/SC29. As a recent video coding technique, there is a technique described in NPL 1.

In these video coding schemes, video data is managed in a hierarchical structure, and is encoded and decoded. The hierarchical structure includes, for example, a picture constituting video data, a slice obtained by partitioning (dividing) the picture (or tile), a coding tree unit (CTU) obtained by partitioning the slice, and a coding unit (CU) obtained by partitioning the coding tree unit.

An input image of a processing target CU is usually encoded in the past with respect to the processing target CU, and is predictively coded based on a prediction image generated based on a decoded image decoded. That is, the prediction error image obtained by subtracting the prediction image from the input image is encoded and decoded. Predictive coding includes intra-screen prediction (intra prediction) using a decoded image included in a picture at the same display time as that of the processing target CU and inter-screen prediction (inter prediction) using a decoded image included in a picture at a display time different from that of the processing target CU.

The prediction error image is encoded based on frequency transform, quantization, and entropy encoding. The prediction error image is decoded based on entropy decoding, inverse quantization, and inverse frequency transform. The frequency transform value of the quantized prediction error image is referred to as a quantized value.

The functions provided by the slice include independent decoding and data partitioning. The independent decoding is a function for decoding without using a decoding result of another slice in the same picture. The data partitioning is a function for partitioning the bitstream into any sizes.

### [Video Coding Based on Neural Network]

NPL 2 discloses a new video coding technique combining an auto-encoder, quantization, and entropy encoding, which are one of neural networks.

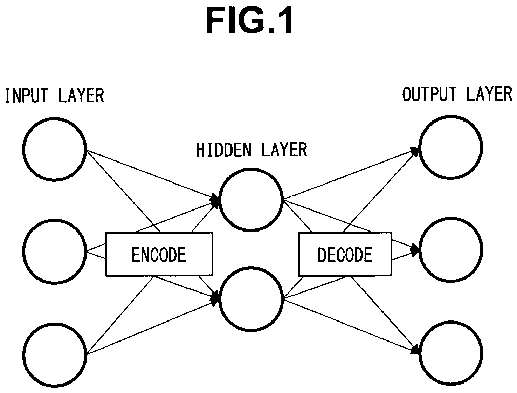

The auto-encoder compresses input data into a low-dimensional feature amount vector so as to include only important features. Thereafter, the auto-encoder generates reconstructed data obtained by reconstructing the low-dimensional feature amount vector to the original dimension. Fig. 1 is an explanatory diagram illustrating an algorithm of an auto-encoder.

In Fig. 1, a circular portion is referred to as a node, and an arrow is referred to as an edge. The processing of dropping into a low-dimensional feature amount vector (first half portion) is referred to as encoding. The processing of generating reconstructed data (latter half portion) is called decoding.

The learning of the auto-encoder proceeds so as to minimize the reconstruction error (the difference between the input data and the reconstructed data). In order to obtain meaningful feature amounts, the auto-encoder is designed to add constraints to the structure of the encoding or to add regularization terms to the loss function of the network.

### Citation List

### Non Patent Literature

NPL 1: "Algorithm description of Enhanced Compression Model 9(ECM 9)", JVET-AD2025, JVET of ITU-T SG 16 WP 3 and ISO/IEC JTC 1/SC 29 30th Meeting, Antalya, TR, 21-28 April 2023
NPL 2: J. Ball'e, V. Laparra, and E. P. Simoncelli, "End-to-end Optimized Image Compression", published as a conference paper at ICLR 2017

### Summary of Invention

### Technical Problem

Video coding based on a neural network has a problem that it is not possible to provide slice functions of independent decoding and data partitioning similarly to video coding based on predictive coding in a coding unit.

The reason why the independent decoding cannot be provided is that encoding on an encoding device side (encoding illustrated in Fig. 1) and decoding on a decoding device side (decoding illustrated in Fig. 1) may be executed beyond (cross) slice boundaries. The reason why data partitioning cannot be provided is that entropy encoding processing on an encoding side and entropy decoding processing on a decoding side may be continuous at a slice boundary.

The succession of entropy encoding processing means that the output is not data aligned. Further, in a case where entropy encoding is based on adaptive arithmetic coding, the succession of entropy encoding processing also includes not resetting the more probable symbol and its probability, and not resetting the engine of arithmetic coding. Meanwhile, a succession of related entropy decoding processing means not decoding the data for the data alignment. Further, in a case where the entropy encoding is based on adaptive arithmetic coding, the succession of entropy encoding processing also includes not resetting the more probable symbol and its probability, and not resetting the engine of arithmetic decoding.

Video coding based on a neural network has a problem that an increase in processing amount, a decrease in encoding efficiency, or both occur when a picture is partitioned into a plurality of slices.

An object of the present invention is to provide a video encoding device, a video decoding device, a video encoding method, and a video decoding method which provide a slice function similar to that of video coding based on predictive coding in a coding unit in video coding based on a neural network.

### Solution to Problem

A video encoding device according to the present disclosure includes a neural network, quantization means, and entropy encoding means, and includes first control means for preventing encoding processing based on the neural network from crossing a slice boundary.

A video decoding device according to the present disclosure includes a neural network, inverse quantization means, and entropy decoding means, and includes first control means for preventing decoding processing based on the neural network from crossing a slice boundary.

A video encoding method according to the present disclosure executes encoding processing based on a neural network, quantization processing, and entropy encoding, and performs control such that the encoding processing does not cross a slice boundary.

A video decoding method according to the present disclosure executes decoding processing, inverse quantization processing, and entropy decoding processing based on a neural network, and performs control such that the decoding processing does not cross a slice boundary.

A video encoding program according to the present disclosure causes a computer to perform encoding processing based on a neural network, quantization processing, and entropy encoding, and perform control such that the encoding processing does not cross a slice boundary.

A video decoding program according to the present disclosure causes a computer to perform decoding processing, inverse quantization processing, and entropy decoding processing based on a neural network, and perform control such that the decoding processing does not cross a slice boundary.

### Advantageous Effects of Invention

According to the present invention, in video coding based on a neural network, a slice function similar to that of video coding based on predictive coding in a coding unit is provided.

### Brief Description of Drawings

[Fig. 1] It depicts an explanatory diagram illustrating an algorithm of an auto-encoder.
[Fig. 2] It depicts a block diagram illustrating a video encoder and a video decoder that encode and decode each picture constituting video data based on a neural network.
[Fig. 3] It depicts an explanatory diagram illustrating an example of slice partitioning in a video encoder.
[Fig. 4] It depicts a flowchart illustrating an operation example of a video encoder.
[Fig. 5] It depicts an explanatory diagram illustrating an example of slice partitioning in a video decoder.
[Fig. 6] It depicts a flowchart illustrating an operation example of a video decoder.
[Fig. 7] It depicts a block diagram illustrating another example of a video encoder and a video decoder that encode and decode each picture constituting video data based on a neural network.
[Fig. 8] It depicts a flowchart illustrating another operation example of the video encoder.
[Fig. 9] It depicts a flowchart illustrating another operation example of the video decoder.
[Fig. 10] It depicts a block diagram illustrating a configuration example of an encoder and a decoder.
[Fig. 11] It depicts a block diagram illustrating another configuration example of the video encoder.
[Fig. 12] It depicts a block diagram illustrating another configuration example of the video decoder.
[Fig. 13] It depicts an explanatory diagram illustrating an example of slice partitioning in a video encoder.
[Fig. 14] It depicts a block diagram illustrating a configuration example of an information processing system.
[Fig. 15] It depicts a block diagram illustrating main parts of the video encoding device.
[Fig. 16] It depicts a block diagram illustrating main parts of the video decoding device.

### Example Embodiment

Hereinafter, example embodiments will be described with reference to the drawings.

### First Example Embodiment.

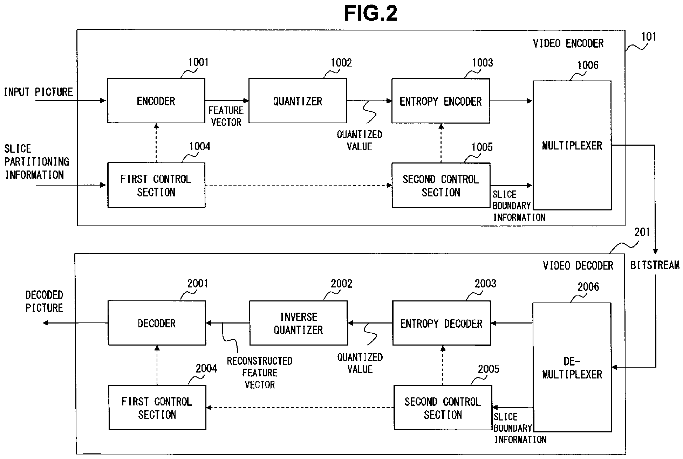

Fig. 2 is a block diagram illustrating a video encoder 101 and a video decoder 201 that encode and decode each picture constituting video data based on a neural network.

The video encoder 101 includes an encoder 1001, a quantizer 1002, an entropy encoder 1003, a first control section 1004, a second control section 1005, and a multiplexer 1006.

The video decoder 201 includes a decoder 2001, an inverse quantizer 2002, an entropy decoder 2003, a first control section 2004, a second control section 2005, and a de-multiplexer 2006.

The arrows in Fig. 2 clearly indicate the flow direction of the signal (data), but do not exclude the bidirectionality. It similarly applies to other block diagrams.

### [Description of Encoding Side]

In the video encoder 101, the first control section 1004 obtains a slice boundary in feature vector domain based on the input slice partitioning information (information for specifying slice boundary information). Alternatively, the first control section 1004 obtains information for specifying a slice boundary in feature vector domain. The information for specifying the slice boundary in feature vector domain is, for example, a slice boundary in image domain of each slice region. The first control section 1004 performs control so that encoding processing (hereinafter, simply referred to as encoding) by the encoder 1001 does not cross a slice boundary in image domain. Furthermore, the first control section 1004 supplies the position information of the slice boundary in feature vector domain to the multiplexer 1006 as slice boundary information via the second control section 1005.

The encoder 1001 extracts a feature amount from the image of the input picture. Specifically, the encoder 1001 obtains a feature vector from the image of the input picture. However, the encoder 1001 does not use the input image of the slice region that is not the processing target when obtaining the feature vector of the slice region to be processed according to the control of the first control section 1004. That is, the feature vector of the slice region to be processed is similar to the feature vector obtained by encoding the input image of the slice region to be processed as one picture.

The quantizer 1002 quantizes the feature vector supplied from the encoder 1001 to obtain a quantized value.

The entropy encoder 1003 entropy codes the quantized value supplied from the quantizer 1002 to obtain entropy-encoded data.

The second control section 1005 monitors the entropy encoder 1003 and, after entropy encoding is performed on the last quantized value of each slice region, causes the entropy encoder 1003 to terminate the processing.

The termination of entropy encoding means to align the output of the entropy-encoded data. That is, the entropy encoder 1003 adds the alignment data for the data alignment to the entropy-encoded data. Further, in a case where the entropy encoding is based on adaptive arithmetic coding, the entropy encoder 1003 further resets the more probable symbol and its probability, and the engine of arithmetic coding for the termination of the entropy encoding.

The multiplexer 1006 multiplexes the slice boundary information and the entropy-encoded data supplied from the entropy encoder 1003 and outputs the multiplexed data as a bitstream.

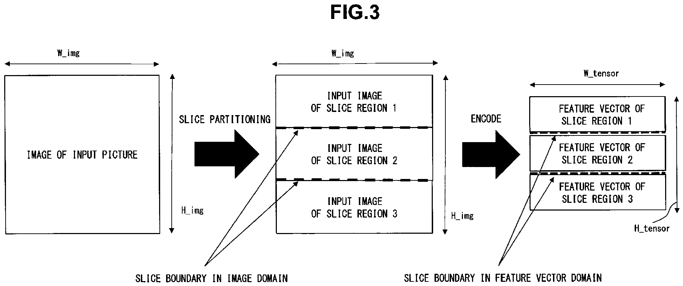

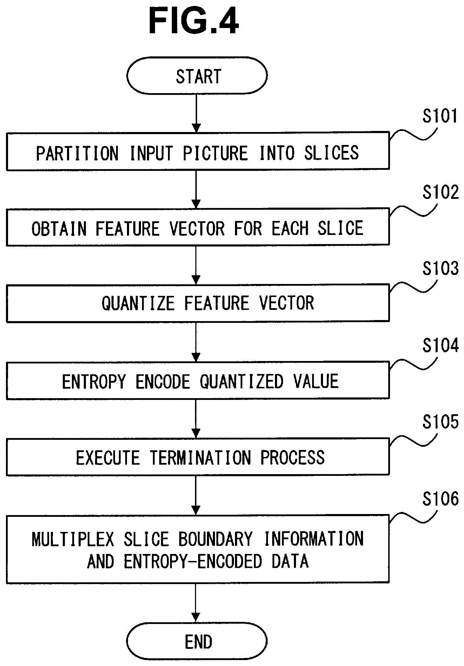

Next, an operation of the video encoder 101 will be described. Here, the operation of the video encoder 101 will be described using an example in which the input picture is equally partitioned into three slices in the vertical direction. Fig. 3 is an explanatory diagram illustrating an example of slice partitioning in the video encoder 101. Fig. 4 is a flowchart illustrating an operation example of the video encoder 101.

In Fig. 3, W_img indicates the width (horizontal size) of the input picture. H_img indicates the height (vertical size) of the input picture. W_tensor indicates a size in the row direction of the feature vector. H_tensor indicates the size of the feature vector in the column direction.

An example in which the input picture is equally partitioned into three slices in the vertical direction is an example, and the manner of partitioning is not limited thereto. For example, the input picture may be unevenly partitioned. The number of partitioning may be two or three or more.

In the video encoder 101, the encoder 1001 partitions the input picture into a plurality of slices (step S101). In the present example embodiment, the input picture is equally partitioned into three slices in the vertical direction (see Fig. 3).

The encoder 1001 extracts a feature amount for each slice and generates a feature vector (step S102).

The quantizer 1002 quantizes the feature vector for each slice to generate a quantized value (step S103).

The entropy encoder 1003 performs entropy encoding on the quantized value to generate entropy-encoded data (step S104).

Then, the entropy encoder 1003 terminates the processing (step S105). As described above, the termination is executed under the control of the second control section 1005.

The multiplexer 1006 multiplexes the slice boundary information and the entropy-encoded data and outputs the multiplexed data as a bitstream (step S106).

### [Description of Decoding Side]

In the video decoder 201, the de-multiplexer 2006 demultiplexes the bitstream to obtain slice boundary information and entropy-encoded data. The de-multiplexer 2006 supplies the slice boundary information to the second control section 2005. The de-multiplexer 2006 supplies the entropy-encoded data to the entropy decoder 2003.

The entropy decoder 2003 performs entropy decoding on the entropy-encoded data supplied from the de-multiplexer 2006 to obtain a quantized value.

The inverse quantizer 2002 inversely quantizes the quantized value supplied from the entropy decoder 2003 to obtain a reconstructed feature vector.

The first control section 2004 performs control such that decoding processing (hereinafter, simply referred to as decoding) by the decoder 2001 does not cross a slice boundary in feature vector domain based on slice boundary information obtained via the second control section 2005.

The decoder 2001 obtains a reconstructed image of the decoded picture from the reconstructed feature vector. However, when the reconstructed image of the slice region to be processed is obtained based on the control of the first control section 2004, the reconstructed feature vector of the slice region not to be processed is not used. That is, the reconstructed image of the slice region to be processed is similar to the reconstructed image obtained by decoding the reconstructed feature vector of the slice region to be processed as one picture.

The second control section 2005 monitors the entropy decoder 2003, performs entropy decoding on the last quantized value of each slice region, and then causes the entropy decoder 2003 to terminate the processing.

The termination of entropy decoding means to align the entropy-encoded data. That is, the alignment data for the data alignment is read from the entropy-encoded data. Furthermore, in a case where the entropy encoding is based on adaptive arithmetic coding, for the termination of the entropy decoding, the more probable symbol and its probability, and the engine of the arithmetic coding are reset.

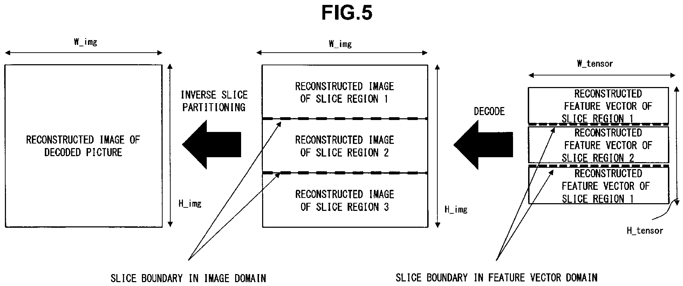

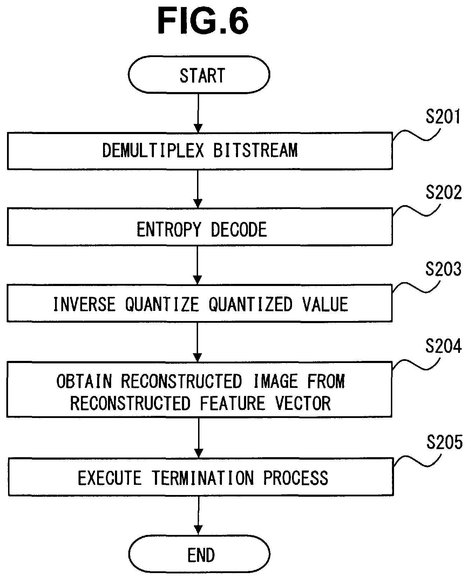

Next, an operation of the video decoder 201 will be described. Here, the operation of the video decoder 201 will be described using an example in which the input picture is equally partitioned into three slices in the vertical direction. Fig. 5 is an explanatory diagram illustrating an example of slice partitioning in the video decoder 201. Fig. 6 is a flowchart illustrating an operation example of the video decoder 201.

In Fig. 5, W_tensor indicates a size in the row direction of the feature vector. H_tensor indicates the size of the feature vector in the column direction. W_img indicates the width (horizontal size) of the decoded picture. H_img indicates the height (vertical size) of the decoded picture.

In the video decoder 201, the de-multiplexer 2006 demultiplexes the bitstream (step S201). The de-multiplexer 2006 obtains slice boundary information and entropy-encoded data by demultiplexing.

The entropy decoder 2003 performs entropy decoding on the entropy-encoded data to obtain a quantized value (step S202).

The inverse quantizer 2002 inversely quantizes the quantized value (step S203). The inverse quantizer 2002 obtains a reconstructed feature vector by inverse quantization.

The decoder 2001 obtains a reconstructed image of the decoded picture from the reconstructed feature vector (step S204). As described above, the decoder 2001 does not use the reconstructed feature vector of the slice region that is not the processing target when obtaining the reconstructed image of the slice region to be processed based on the control of the first control section 2004. In other words, the decoder 2001 performs decoding so as not to cross the slice boundary in feature vector domain based on the slice boundary information.

Then, the entropy decoder 2003 terminates the processing (step S205). As described above, the termination is executed under the control of the second control section 2005. The video decoder 201 may execute the decoding processing starting from step S201 in a case where it is confirmed that the information indicating the termination or the information indicating that such partitioning has been performed is included in the bitstream.

In the present example embodiment, under the control of the first control section 1004 and the first control section 2004, encoding on the encoding side and decoding on the decoding side do not cross slice boundaries, so that independent decoding is guaranteed in video coding based on a neural network.

The entropy encoding processing on the encoding side and the entropy decoding processing on the decoding side are not continuous at the slice boundary by the control related to the termination of the second control section 1005 and the second control section 2005, and thus, the data partitioning is guaranteed in the video coding based on the neural network.

### Second Example Embodiment.

The video encoder 101 of the first example embodiment may cause an increase in a processing amount, a decrease in encoding efficiency, or both in maximum transfer unit (MTU) size matching at the time of packet transmission of the bitstream of each slice.

The above possibilities arise as follows.
1) In a case where the bitstream of the slice processed by partitioning based on the set slice partitioning information does not satisfy the MTU size (that is, in a case where the bitstream is larger than the MTU size), the video coding has to be redone, and the processing amount increases.
2) When the number of slice partitioning is increased from the beginning, a partitioning loss occurs and the encoding efficiency is lowered.

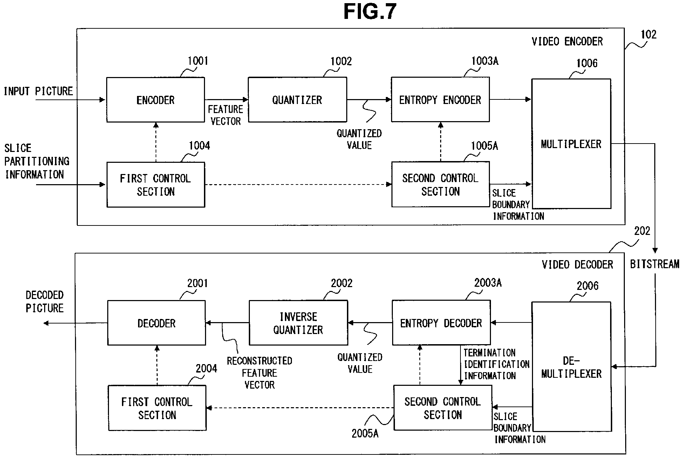

Fig. 7 is a block diagram illustrating a video encoder 102 and a video decoder 202 that can eliminate the above possibilities, the video encoder 102 and the video decoder 202 encoding and decoding each picture constituting video data based on a neural network.

The video encoder 102 includes an encoder 1001, a quantizer 1002, an entropy encoder 1003A, a first control section 1004, a second control section 1005A, and a multiplexer 1006.

The video decoder 202 includes a decoder 2001, an inverse quantizer 2002, an entropy decoder 2003A, a first control section 2004, a second control section 2005A, and a de-multiplexer 2006.

### [Description of Encoding Side]

In the video encoder 102, configurations and functions of the encoder 1001, the quantizer 1002, the first control section 1004, and the multiplexer 1006 are the same as those in the first example embodiment.

The entropy encoder 1003A performs entropy encoding on the quantized value supplied from the quantizer 1002 and the termination identification information supplied from the second control section 1005A to obtain entropy-encoded data.

In addition to the function of the second control section 1005 in the first example embodiment, the second control section 1005A has a function of determining a value (for example, 0: no termination, 1: termination) of termination identification information indicating whether to terminate entropy encoding in a slice region at a predetermined interval (for example, W_tensor which is a width of one line of the feature vector) having a finer granularity than the slice region. The second control section 1005A may use a value indicating that 0 terminates and 1 does not terminate as the value of the termination identification information.

For example, when the second control section 1005A monitors the number of output bits of the entropy encoder 1003A and predicts that the size of the bitstream of the slice region to be processed becomes larger than the MTU size, or when entropy encoding is performed on the last quantized value of the slice region, the value of the termination identification information is set to 1. Otherwise, the second control section 1005A sets the value of the termination identification information to 0. In a case where the value of the termination identification information is 1, the second control section 1005A causes the entropy encoder 1003A to terminate the processing.

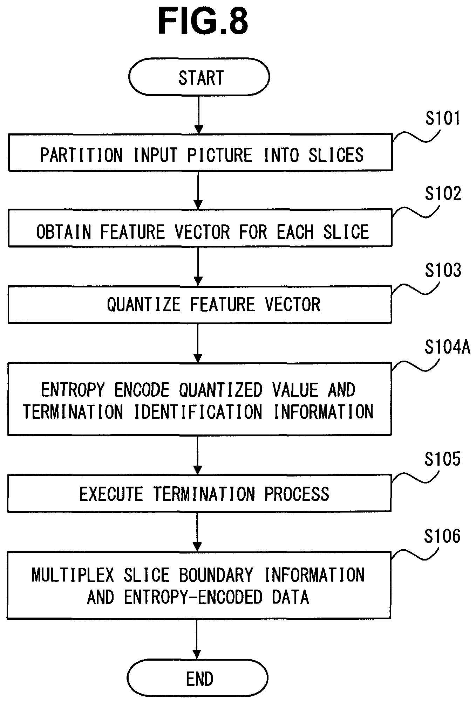

Next, an operation of the video encoder 102 will be described. Fig. 8 is a flowchart illustrating an operation example of the video encoder 102. Also in the present example embodiment, similarly to the case of the first example embodiment, the operation of the video encoder 102 will be described using an example in which an input picture is equally partitioned into three slices in the vertical direction.

The processing in steps S101 to S103 is the same as the processing in the first example embodiment.

In step S104A, the entropy encoder 1003A performs entropy encoding on the quantized value supplied from the quantizer 1002 and the termination identification information supplied from the second control section 1005A to obtain entropy-encoded data.

The processing in steps S105 and S106 is the same as the processing in the first example embodiment. In the present example embodiment, the entropy-encoded data multiplexed in the processing of step S106 also includes data related to the termination identification information.

### [Description of Decoding Side]

In the video decoder 202, configurations and functions of the decoder 2001, the inverse quantizer 2002, the first control section 2004, and the de-multiplexer 2006 are the same as those in the first example embodiment.

The entropy decoder 2003A performs entropy decoding on the entropy-encoded data supplied from the de-multiplexer 2006 to obtain a quantized value and termination identification information.

The second control section 2005A has a function of monitoring the termination identification information supplied from the entropy decoder 2003A and causing the entropy decoder 2003A to terminate the processing when the value is 1, in addition to the function of the second control section 2005 in the first example embodiment.

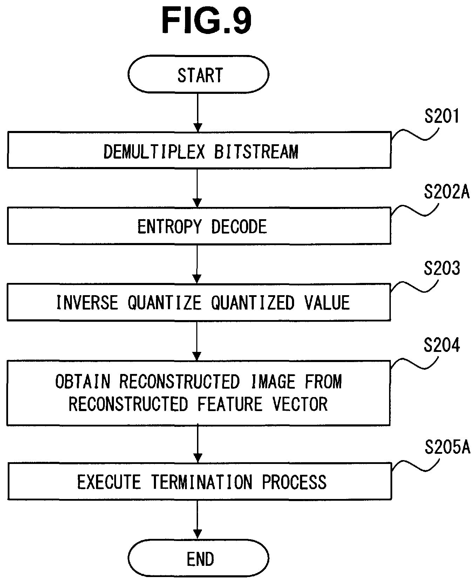

Next, an operation of the video decoder 202 will be described. Fig. 9 is a flowchart illustrating an operation example of the video decoder 202. Also in the present example embodiment, similarly to the case of the first example embodiment, the operation of the video decoder 202 will be described using an example in which an input picture is equally partitioned into three slices in the vertical direction.

The processing in step S201 is the same as the processing in the first example embodiment. In the present example embodiment, the entropy-encoded data demultiplexed in the processing of step S201 also includes data related to the termination identification information.

In step S202A, the entropy decoder 2003A performs entropy decoding on the entropy-encoded data supplied from the de-multiplexer 2006 to obtain a quantized value and termination identification information.

The processing in steps S203 and S204 is the same as the processing in the first example embodiment.

In step S205A, the second control section 2005A monitors the termination identification information supplied from the entropy decoder 2003A, and when the value is 1, causes the entropy decoder 2003A to terminate the processing.

In the present example embodiment, the bitstream of each slice can be terminated inside by the processing of the entropy encoder 1003A, the second control section 1005A, the entropy decoder 2003A, and the second control section 2005A. That is, the bitstream can be partitioned in units finer than the partitioning of the set slice partitioning information to make the slice equal to or less than the MTU size. As a result, an increase in a processing amount of video coding and a decrease in encoding efficiency can be reduced.

### [Configuration of Encoder and Decoder]

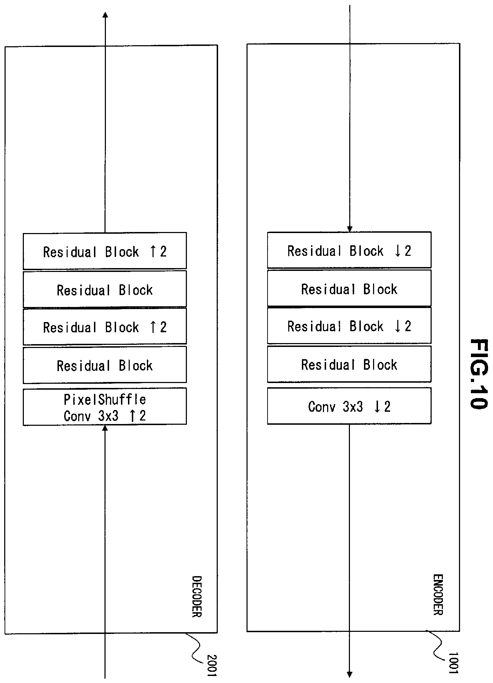

Fig. 10 is a block diagram illustrating configuration examples of the encoder 1001 and the decoder 2001 according to the first and second example embodiments. In Fig. 10, "downward arrow (↓) 2" represents 1/2 subsamples (also referred to as pooling). "Upward arrow (↑) 2" represents 2 upsamples.

In the example illustrated in Fig. 10, the encoder 1001 includes four Residual Blocks and one Convolution Block. The Residual Block includes two Convolutional Blocks and one Shortcut Link. The Convolutional Block includes one Convolution layer and one activation function.

The decoder 2001 includes four Residual Blocks and one Pixel Shuffle convolution layer. The Pixel Shuffler is a mechanism proposed as a Sub-Pixel Convolution. The Pixel Shuffler rearranges the input feature vectors and outputs a high-resolution feature vector.

As the activation function, Parametric Rectified Linear Unit (Parametric ReLU) can be used in which, in a case where an input value is less than 0, an output value is a value obtained by multiplying the input value by α (where, α is a parameter and is determined by learning), and in a case where an input value is 0 or more, an output value is the same value as the input value.

The configuration illustrated in Fig. 10 is an example, and the configurations of the encoder 1001 and the decoder 2001 are not limited to the configuration illustrated in Fig. 10.

### Third Example Embodiment.

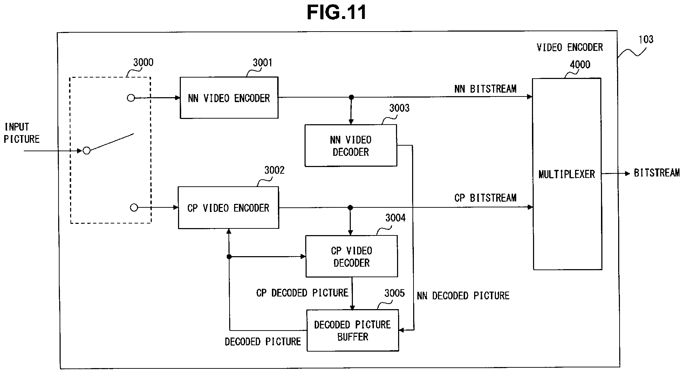

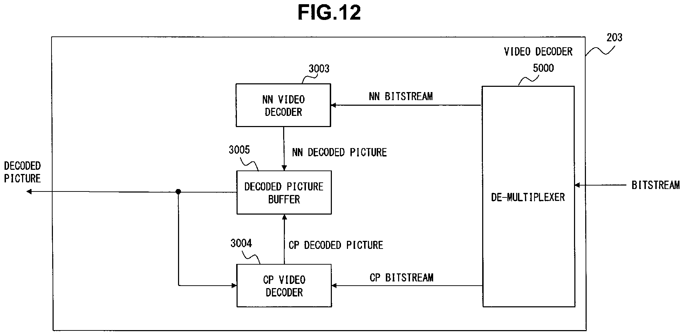

Fig. 11 is a block diagram illustrating another configuration example of the video encoder. Fig. 12 is a block diagram illustrating another configuration example of the video decoder.

The video encoder 103 illustrated in Fig. 11 includes a switch 3000, an NN video encoder 3001, an NN video decoder 3003, a CP video encoder 3002, a CP video decoder 3004, a decoded picture buffer 3005, and a multiplexer 4000 that performs multiplexing processing of entropy-encoded data and other information.

"NN" means a neural network. "CP" means prediction based on a coding unit.

The CP video encoder 3002 performs video encoding processing by a video coding scheme based on predictive coding in units of coding units. The CP video decoder 3004 performs decoding processing by a video coding scheme based on predictive coding in units of coding units. Decoded picture buffer 3005 is a storage section that stores decoded pictures (reconstructed pictures). As described above, a scheme conforming to H.264/AVC, H.265/HEVC, H.266/VVC, or the like can be used as the video coding scheme.

As the NN video encoder 3001, the video encoder 101 or the video encoder 102 in each of the above example embodiments can be used. As the NN video decoder 3003, the video decoder 201 or the video decoder 202 in each of the above example embodiments can be used.

A video decoder 203 illustrated in Fig. 12 includes a de-multiplexer 5000 that demultiplexes a bitstream, an NN video decoder 3003, a CP video decoder 3004, and a decoded picture buffer 3005.

That is, the video encoder 103 illustrated in Fig. 11 and the video decoder 203 illustrated in Fig. 12 are a video encoder and a video decoder in which the video encoder 101 or the video encoder 102 described above is the NN video encoder 3001, the video decoder 201 or the video decoder 202 described above is the NN video decoder 3003, and the video encoder and the video decoder are combined with the CP video encoder 3002 and the CP video decoder 3004 based on the video coding scheme based on the predictive coding in the coding unit.

### [Description of Encoding Side]

In the video encoder 103 illustrated in Fig. 11, the switch 3000 supplies the input picture to either the NN video encoder 3001 or the CP video encoder 3002.

The NN video encoder 3001 operates similarly to the video encoder 101 of the first example embodiment or the video encoder 102 of the second example embodiment to generate a bitstream (also referred to as an NN bitstream).

The NN video decoder 3003 receives an input of the NN bitstream supplied from the NN video encoder 3001, and operates similarly to the video decoder 201 of the first example embodiment or the video decoder 202 of the second example embodiment to obtain a decoded picture (also referred to as an NN decoded picture). The NN video decoder 3003 stores the NN decoded picture in the decoded picture buffer 3005.

The CP video encoder 3002 performs video coding based on predictive coding in a coding unit by using an input picture and a decoded picture stored in the decoded picture buffer 3005, and generates a bitstream (also referred to as a CP bitstream).

The CP video decoder 3004 inputs the CP bitstream supplied from the CP video encoder 3002, performs entropy decoding processing, and then performs decoding processing based on predictive coding in a coding unit to obtain a decoded picture (also referred to as a CP decoded picture). The CP video decoder 3004 stores the CP decoded picture in the decoded picture buffer 3005.

The decoded picture stored in decoded picture buffer 3005 is used as a reference picture.

In the configuration illustrated in Fig. 11, the NN video decoder 3003 receives an NN bitstream from the NN video encoder 3001 and executes entropy decoding processing. Then, the NN video decoder 3003 obtains an NN decoded picture from the encoded data obtained by the entropy decoding. However, the NN video decoder 3003 may be configured to receive the intermediate data (for example, the quantized value) before entropy encoding from the NN video encoder 3001 and obtain an NN decoded picture from the intermediate data. In that case, the NN video decoder 3003 may not execute entropy decoding processing.

In the configuration illustrated in Fig. 11, the CP video decoder 3004 receives the CP bitstream from the CP video encoder 3002 and performs entropy decoding processing. Then, the CP video decoder 3004 obtains a CP decoded picture from the encoded data obtained by entropy decoding. However, the CP video decoder 3004 may be configured to receive the intermediate data before entropy encoding (for example, the quantized value) from the CP video encoder 3002 and obtain a CP decoded picture from the intermediate data. In that case, the CP video decoder 3004 may not perform entropy decoding processing.

### [Description of Decoding Side]

In the video decoder 203 illustrated in Fig. 12, the NN video decoder 3003 operates similarly to the video decoder 201 of the first example embodiment or the video decoder 202 of the second example embodiment based on the encoded data obtained by demultiplexing the NN bitstream to obtain an NN decoded picture. The NN video decoder 3003 stores the NN decoded picture in the decoded picture buffer 3005.

The CP video decoder 3004 demultiplexes the CP bitstream, performs entropy decoding processing, and obtains a CP decoded picture based on the obtained encoded data. The CP video decoder 3004 stores the CP decoded picture in the decoded picture buffer 3005.

The video decoder 203 outputs the NN decoded picture or the CP decoded picture stored in the decoded picture buffer 3005 as a decoded picture.

### [First Modification]

In each of the above example embodiments, slice independent decoding and data partitioning are both satisfied. However, only the data partitioning of the slice may be satisfied. In this case, the first control section 1004 may not be provided in the video encoders 101 and 102. In the video decoders 201 and 202, the first control section 2004 may not be provided.

### [Second Modification]

In a case where complete independent decoding of slices is not required, the first control section 1004 in the video encoders 101 and 102 may relax a slice boundary that cannot be crossed. For example, when a feature vector of a slice region to be processed is encoded, a form in which an input image of a slice region related to a slice subsequent in a bitstream is not allowed to cross is considered. That is, the feature vector of the slice region 1 (see Fig. 3) is generated using the input image of the slice region 1. The feature vector of the slice region 2 is generated using the input images of the slice region 1 and the slice region 2. The feature vector of the slice region 3 is generated using the input images of the slice regions 1, 2, and 3. In this form (second modification), complete independent decoding cannot be obtained, but a decrease in encoding efficiency due to a partitioning loss can be relaxed.

In a video decoder related to a video encoder of the second modification, when decoding a reconstructed feature vector of a slice region to be processed, the first control section 2004 performs control so as not to cross a reconstructed feature vector of a slice region related to a slice subsequent in a bitstream. That is, when obtaining the reconstructed image of the slice region 1, the decoder 2001 uses the reconstructed feature vector of the slice region 1 (see Fig. 5). The decoder 2001 uses the reconstructed feature vectors of the slice region 1 and the slice region 2 when obtaining the reconstructed image of the slice region 2. The decoder 2001 uses the reconstructed feature vectors of the slice regions 1, 2, and 3 when obtaining the feature reconstructed image of the slice region 3.

### [Third Modification]

In a case where complete independent decoding of slices is not required, the first control section 1004 in the video encoders 101 and 102 may relax a slice boundary that cannot be crossed. For example, when a feature vector of a slice region to be processed is encoded, it is conceivable to limit a range over which an input image of a slice region related to a slice subsequent in a bitstream is allowed to cross.

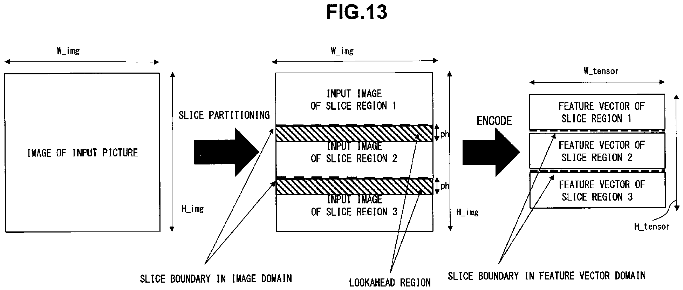

Fig. 13 is an explanatory diagram illustrating an example of slice partitioning in a video encoder according to the third modification.

The encoder 1001 generates a feature vector of the slice region 1 in Fig. 13 using the slice region 1 and an input image of a predetermined region (hereinafter, referred to as a "lookahead region": a hatched region in Fig. 13) adjacent to the slice region. The encoder 1001 generates a feature vector of the slice region 2 using the slice region 1, the slice region 2, and an input image of a lookahead region adjacent to the slice region 2. When generating the feature vector of the slice region 3, the encoder 1001 does not use a lookahead region since there is no lookahead region adjacent to the slice region 3. That is, the encoder 1001 generates the feature vector of the slice region 3 using the input images of the slice region 1, the slice region 2, and the slice region 3.

In this example, complete independent decoding cannot be obtained, but a decrease in encoding efficiency due to a partitioning loss can be relaxed as compared with the second modification. However, the processing delay is longer than that in the second modification by the time for waiting for the input of the lookahead region adjacent to the processing target slice. As a matter of course, when the maximum value of the range referred to by the encoding processing is set to the height ph of the lookahead region, the feature vector of the entire picture matches the case without slice partitioning. In the encoder configuration of the example illustrated in Fig. 10, in a case where the kernel size of the convolution constituting each block is 3×3, the matching ph is 29.

The operation of the video decoder related to the video encoder of the third modification is the same as the operation of the video decoder of the second modification. That is, in the video decoder according to the present modification, when decoding the reconstructed feature vector of the slice region to be processed, the first control section 2004 performs control so as not to cross the reconstructed feature vector of the slice region related to the slice subsequent in the bitstream. Specifically, when obtaining the reconstructed image of the slice region 1, the decoder 2001 utilizes the reconstructed feature vector of the slice region 1 (see Fig. 5). The decoder 2001 uses the reconstructed feature vectors of the slice region 1 and the slice region 2 when obtaining the reconstructed image of the slice region 2. The decoder 2001 uses the reconstructed feature vectors of the slice regions 1, 2, and 3 when obtaining the feature reconstructed image of the slice region 3.

### [Fourth Modification]

In the second and third example embodiments described above, the multiplexer 1006 implicitly multiplexes the termination identification information indicating whether to terminate the entropy encoding in the slice region into the bitstream at predetermined intervals (W_tensor). However, the multiplexer 1006 may explicitly embed the predetermined interval in the bitstream. The predetermined interval may be other than W_tensor as long as the granularity is finer than that of the slice region.

The slice boundary information described above can be configured as follows.

In a case where the frame is sliced at an equal size, the number of slice partitioning and the coordinates or slice number of the top-left corner of each slice.

In a case where the frame is sliced at a non-uniform size, the coordinates of the top-left corner of each slice and the horizontal and vertical widths of each slice.

In the example illustrated in Fig. 3, the slice numbers are reference numbers assigned to three slices (slice regions) in order from the top. The slice numbers may be assigned in order from the bottom.

Each of the above example embodiments can be configured by hardware, but can also be implemented by a computer program.

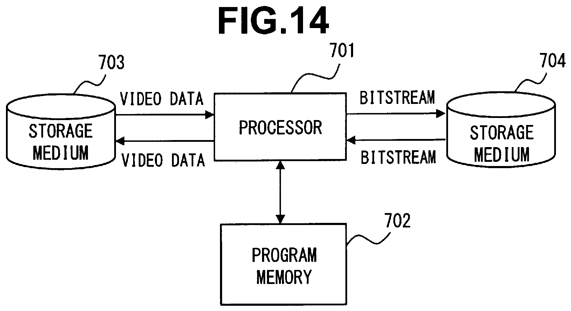

The information processing system illustrated in Fig. 14 includes a processor 701 such as one or more central processing units (CPUs), a program memory 702, a storage medium 703 for storing video data, and a storage medium 704 for storing a bitstream. The storage medium 703 and the storage medium 704 may be separate storage media, or may be storage regions composed of the same storage medium. As the storage medium, a magnetic storage medium such as a hard disk can be used.

In the information processing system, a program (a video encoding program or a video decoding program) for implementing the function of each block described in each of the above example embodiments is stored in the program memory 702.

Then, the processor 701 implements the functions of the video encoders 101, 102, and 103 and the video decoders 201, 202, and 203 described in each example embodiment by executing processing according to the program stored in the program memory 702.

For example, the functions of the video encoders 101, 102, and 103 are implemented by the processor 701 executing processing according to a video encoding program for implementing the functions of the blocks (excluding the decoded picture buffer 3005) in the video encoders 101, 102, and 103 illustrated in Figs. 2, 7, and 11.

For example, the functions of the video decoders 201, 202, and 203 are implemented by the processor 701 executing processing according to a video decoding program for implementing the function of each block (excluding the decoded picture buffer 3005) in the video decoders 201, 202, and 203 illustrated in Figs. 2, 7, and 12.

At least the program memory 702 is a non-transitory computer readable medium. However, the program may be stored in various types of transitory computer readable media. The transitory computer-readable medium is supplied with the program via, for example, a wired communication path or a wireless communication path, that is, via an electrical signal, an optical signal, or an electromagnetic wave.

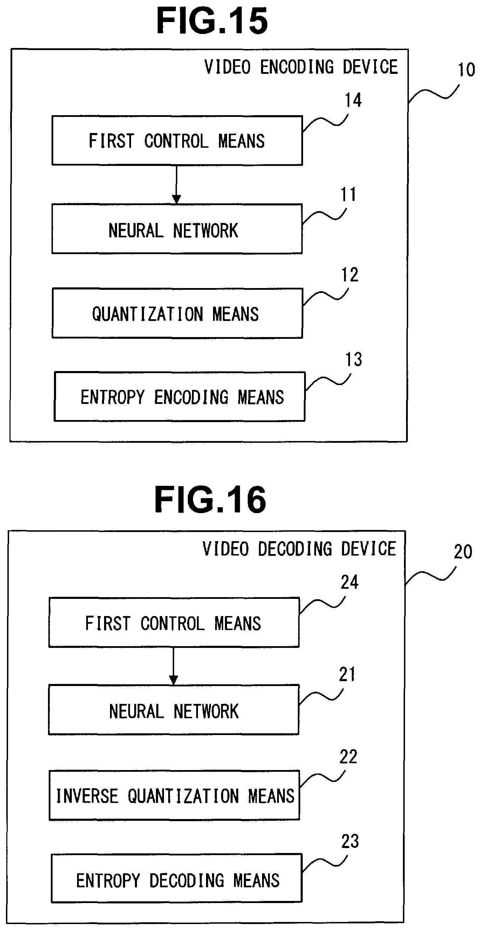

Fig. 15 is a block diagram illustrating main parts of the video encoding device. A video encoding device 10 (in the example embodiment, implemented by the video encoders 101, 102, and 103) illustrated in Fig. 15 includes a neural network 11 (in the example embodiment, implemented by the encoder 1001), a quantization means 12 (in the example embodiment, implemented by the quantizer 1002), and an entropy encoding means 13 (in the example embodiment, implemented by entropy encoders 1003 and 1003A), and includes a first control means 14 (in the example embodiment, implemented by the first control section 1004) for not allowing encoding processing based on the neural network 11 to cross a slice boundary.

Fig. 16 is a block diagram illustrating main parts of the video decoding device. A video decoding device 20 (in the example embodiment, implemented by the video decoders 201, 202, and 203) illustrated in Fig. 16 includes a neural network 21 (in the example embodiment, implemented by the decoder 2001), an inverse quantization means 22 (in the example embodiment, implemented by the inverse quantizer 2002), and an entropy decoding means 23 (in the example embodiment, implemented by entropy decoders 2003 and 2003A), and includes a first control means 24 (in the example embodiment, implemented by the first control section 2004) for not allowing decoding processing based on the neural network 21 to cross a slice boundary.

Some or all of the above example embodiments may be described as the following Supplementary notes, but are not limited to the following.

(Supplementary note 1) A video encoding device comprising a neural network, quantization means, and entropy encoding means,
the video encoding device further comprises
first control means for preventing encoding processing based on the neural network from crossing a slice boundary.

(Supplementary note 2) The video encoding device according to Supplementary note 1, further comprising
second control means (in the example embodiment, implemented by the second control sections 1005 and 1005A) for terminating entropy encoding in a slice,
wherein
the entropy encoding means performs entropy encoding on identification information indicating whether the entropy encoding is terminated.

(Supplementary note 3) The video encoding device according to Supplementary note 1 or 2, further comprising
predictive encoding means (in the example embodiment, implemented by the CP video encoder 3002) for performing predictive coding in units of coding units.

(Supplementary note 4) A video decoding device comprising a neural network, inverse quantization means, and entropy decoding means,
wherein the video decoding device further comprises
first control means for preventing decoding processing based on the neural network from crossing a slice boundary.

(Supplementary note 5) The video decoding device according to Supplementary note 4, wherein
the entropy decoding means performs entropy decoding on identification information indicating whether entropy encoding is terminated in a slice,
wherein the video decoding device further comprises
second control means (in the example embodiment, implemented by the second control sections 2005 and 2005A) for terminating entropy decoding in the slice based on the identification information.

(Supplementary note 6) The video decoding device according to Supplementary note 4 or 5, further comprising
predictive decoding means (in the example embodiment, implemented by the CP video decoder 3004) for performing predictive decoding in units of coding units.

(Supplementary note 7) A video encoding method for performing encoding processing based on a neural network, quantization processing, and entropy encoding,
wherein the video encoding method comprises
performing control such that the encoding processing does not cross a slice boundary.

(Supplementary note 8) The video encoding method according to Supplementary note 7, further comprising:
performing control to terminate entropy encoding in a slice; and
performing entropy encoding on identification information indicating whether the entropy encoding is terminated.

(Supplementary note 9) The video encoding method according to Supplementary note 7 or Supplementary note 8, further comprising
performing predictive coding processing in units of coding units.

(Supplementary note 10) A video decoding method for executing decoding processing, inverse quantization processing, and entropy decoding processing based on a neural network,
wherein the video decoding method comprises
performing control such that the decoding processing does not cross a slice boundary.

(Supplementary note 11) The video decoding method according to Supplementary note 10, further comprising:
performing entropy decoding on identification information indicating whether entropy encoding is terminated in a slice; and
performing control to terminate entropy decoding in the slice based on the identification information.

(Supplementary note 12) The video decoding method according to Supplementary note 10 or Supplementary note 11, further comprising
performing predictive decoding processing in units of coding units.

(Supplementary note 13) A video encoding program for causing a computer to:
perform encoding processing based on a neural network, quantization processing, and entropy encoding; and
perform control such that the encoding processing does not cross a slice boundary.

(Supplementary note 14) The video encoding program according to Supplementary note 13,
wherein the video encoding program further causes the computer to:
perform control to terminate entropy encoding in a slice; and
perform entropy encoding on identification information indicating whether the entropy encoding is terminated.

(Supplementary note 15) The video encoding program according to Supplementary note 13 or Supplementary note 14, further causing the computer to
perform predictive coding processing in units of coding units.

(Supplementary note 16) A video decoding program for causing a computer to:
execute decoding processing, inverse quantization processing, and entropy decoding processing based on a neural network; and
perform control such that the decoding processing does not cross a slice boundary.

(Supplementary note 17) The video decoding program according to Supplementary note 16,
wherein the video decoding program further causes the computer to:
perform entropy decoding on identification information indicating whether entropy encoding is terminated in a slice; and
perform control to terminate entropy decoding in the slice based on the identification information.

(Supplementary note 18) The video decoding program according to Supplementary note 16 or Supplementary note 17, further causing the computer to
perform predictive decoding processing in units of coding units.

(Supplementary note 19) A storage medium storing a bitstream generated by a video encoding device comprising a neural network, quantization means, and entropy encoding means,
wherein the video encoding device comprises first control means for preventing encoding processing based on the neural network from crossing a slice boundary.

(Supplementary note 20) A storage medium storing a bitstream generated by a video encoding method for performing encoding processing based on a neural network, quantization processing, and entropy encoding,
wherein the video encoding method performs control such that the encoding processing does not cross a slice boundary.

(Supplementary note 21) A video encoding device comprising a neural network, quantization means, and entropy encoding means, comprising
second control means for terminating entropy encoding in a slice,
wherein
the entropy encoding means performs entropy encoding on identification information indicating whether the entropy encoding is terminated.
This Supplementary note is related to the first modification described above.

(Supplementary note 22) The video encoding device according to Supplementary note 21, wherein,
in encoding processing based on the neural network, only a slice boundary of a slice region subsequent in bitstream order is not crossed.
This Supplementary note is related to the second modification described above.

(Supplementary note 23) The video encoding device according to Supplementary note 22, wherein
a predetermined interval is multiplexed into a bitstream, and
the entropy encoding means performs entropy encoding on identification information indicating whether the second control means terminates entropy encoding at the predetermined interval.
This Supplementary note is related to the third modification described above.

(Supplementary note 24) A video decoding device comprising a neural network, inverse quantization means, and entropy decoding means, wherein
the entropy decoding means performs entropy decoding on identification information indicating whether entropy encoding is terminated in a slice, the video decoding device further comprising
second control means for terminating entropy decoding in the slice based on the identification information.
This Supplementary note is related to the first modification described above.

(Supplementary note 25) The video decoding device according to Supplementary note 24, wherein,
in decoding processing based on the neural network, only a slice boundary of a slice region subsequent in bitstream order is not crossed.
This Supplementary note is related to the second modification described above.

(Supplementary note 26) The video encoding device according to Supplementary note 25, wherein
a predetermined interval is demultiplexed from a bitstream, and
the entropy decoding means performs entropy decoding on identification information indicating whether entropy encoding is terminated at the predetermined interval.
This Supplementary note is related to the third modification described above.

This application is based upon and claims the benefit of priority from Japanese patent application No. 2023-155646 filed on September 21, 2023 and Japanese patent application No. 2024-035446 filed on March 8, 2024, the disclosures of which are incorporated herein in their entirety by reference.

### Reference Signs List

- 10: Video encoding device
- 11: Neural network
- 12: Quantization means
- 13: Entropy encoding means
- 14: First control means
- 20: Video decoding device
- 21: Neural network
- 22: Inverse quantization means
- 23: Entropy decoding means
- 24: First control means
- 101, 102, 103: Video encoder
- 201, 202, 203: Video decoder
- 701: Processor
- 702: Program memory
- 703, 704: Storage medium
- 1001: Encoder
- 1002: Quantizer
- 1003, 1003A: Entropy encoder
- 1004: First control section
- 1005, 1005A: Second control section
- 1006: Multiplexer
- 2001: Decoder
- 2002: Inverse quantizer
- 2003, 2003A: Entropy decoder
- 2004: First control section
- 2005, 2005A: Second control section
- 2006: De-multiplexer
- 3000: Switch
- 3001: NN video encoder
- 3002: CP video encoder
- 3003: NN video decoder
- 3004: CP video decoder
- 3005: Decoded picture buffer
- 4000: Mmultiplexer
- 5000: De-multiplexer

## Claims

1. A video encoding device comprising a neural network, quantization means, and entropy encoding means,
the video encoding device further comprises
first control means for preventing encoding processing based on the neural network from crossing a slice boundary.

2. The video encoding device according to claim 1, further comprising
second control means for terminating entropy encoding in a slice,
wherein
the entropy encoding means performs entropy encoding on identification information indicating whether the entropy encoding is terminated.

3. The video encoding device according to claim 1 or 2, further comprising
predictive encoding means for performing predictive coding in units of coding units.

4. A video decoding device comprising a neural network, inverse quantization means, and entropy decoding means,
wherein the video decoding device further comprises
first control means for preventing decoding processing based on the neural network from crossing a slice boundary.

5. The video decoding device according to claim 4, wherein
the entropy decoding means performs entropy decoding on identification information indicating whether entropy encoding is terminated in a slice,
wherein the video decoding device further comprises
second control means for terminating entropy decoding in the slice based on the identification information.

6. The video decoding device according to claim 4 or 5, further comprising
predictive decoding means for performing predictive decoding in units of coding units.

7. A video encoding method for performing encoding processing based on a neural network, quantization processing, and entropy encoding,
wherein the video encoding method comprises
performing control such that the encoding processing does not cross a slice boundary.

8. The video encoding method according to claim 7, further comprising:
performing control to terminate entropy encoding in a slice; and
performing entropy encoding on identification information indicating whether the entropy encoding is terminated.

9. The video encoding method according to claim 7 or 8, further comprising
performing predictive coding processing in units of coding units.

10. A video decoding method for executing decoding processing, inverse quantization processing, and entropy decoding processing based on a neural network,
wherein the video decoding method comprises
performing control such that the decoding processing does not cross a slice boundary.

11. The video decoding method according to claim 10, further comprising:
performing entropy decoding on identification information indicating whether entropy encoding is terminated in a slice; and
performing control to terminate entropy decoding in the slice based on the identification information.

12. The video decoding method according to claim 10 or 11, further comprising
performing predictive decoding processing in units of coding units.

13. A video encoding program for causing a computer to:
perform encoding processing based on a neural network, quantization processing, and entropy encoding; and
perform control such that the encoding processing does not cross a slice boundary.

14. The video encoding program according to claim 13,
wherein the video encoding program further causes the computer to:
perform control to terminate entropy encoding in a slice; and
perform entropy encoding on identification information indicating whether the entropy encoding is terminated.

15. The video encoding program according to claim 13 or 14, further causing the computer to
perform predictive coding processing in units of coding units.

16. A video decoding program for causing a computer to:
execute decoding processing, inverse quantization processing, and entropy decoding processing based on a neural network; and
perform control such that the decoding processing does not cross a slice boundary.

17. The video decoding program according to claim 16,
wherein the video decoding program further causes the computer to:
perform entropy decoding on identification information indicating whether entropy encoding is terminated in a slice; and
perform control to terminate entropy decoding in the slice based on the identification information.

18. The video decoding program according to claim 16 or 17, further causing the computer to
perform predictive decoding processing in units of coding units.

19. A storage medium storing a bitstream generated by a video encoding device comprising a neural network, quantization means, and entropy encoding means,
wherein the video encoding device comprises first control means for preventing encoding processing based on the neural network from crossing a slice boundary.

20. A storage medium storing a bitstream generated by a video encoding method for performing encoding processing based on a neural network, quantization processing, and entropy encoding,
wherein the video encoding method performs control such that the encoding processing does not cross a slice boundary.
